# EUROPEAN PATENT APPLICATION

(11) **EP 3 869 801 A1**
(43) Date of publication of application: **25.08.2021**
(21) Application number: 19874304.9
(22) Date of filing: 16.07.2019
(51) Int. Cl.: H04N 19/115, H04N 19/167, H04N 19/174, H04N 19/86

(54) **ENCODING DEVICE, ENCODING METHOD, AND DECODING DEVICE**

(30) Priority: 18.10.2018 JP 2018196639
(71) Applicant: Sony Group Corporation, Tokyo 108-0075 (JP)
(72) Inventor: KAMADA, Ko, Tokyo 108-0075 (JP); MISHIMA, Akifumi, Tokyo 108-0075 (JP); ANDO, Katsutoshi, Tokyo 108-0075 (JP)
(74) Representative: D Young & Co LLP
(86) International application number: PCT/JP2019/027861
(87) International publication number: WO 2020/079900

(57) **Abstract**

An encoding device includes: an encoding processing section that performs encoding processing on image data serving as a processing target; and a control unit that controls the encoding processing to make a bit rate in a rate control area higher than a bit rate in an area other than the rate control area, the rate control area being located near a division boundary when the image data serving as the processing target is divided into a plurality of regions.

## Description

### TECHNICAL FIELD

The present technology relates to an encoding device, an encoding method, and a decoding device, and in particular, a technology in a case where one image is divided into a plurality of regions and encoding is performed.

### BACKGROUND ART

A technology for dividing one image into a plurality of regions, performing encoding, decoding and joining the plurality of regions, and conducting a display is known. In such an image display system, a division boundary is conspicuous on a display image in some cases.

In order to avoid this problem, a technique is known in which, under a multi-projection environment, a division boundary is hidden by forming an overlapping portion when an image is divided, and applying gradation to an overlapping portion of adjacent images and performing blending when a display is conducted, as described in Patent Document 1 or 2 listed below.

### CITATION LIST

### PATENT DOCUMENT

Patent Document 1: Japanese Patent Application Laid-Open No. 2004-147143
Patent Document 2: Japanese Patent Application Laid-Open No. 2017-116950

### SUMMARY OF THE INVENTION

### PROBLEMS TO BE SOLVED BY THE INVENTION

However, in a display device, such as a tiling type display, that fails to use a technique for obtaining information to be displayed in one pixel from a plurality of inputs and performing blending, the technique described in Patent Document 1 or 2 fails to be used.

Furthermore, if all of the divided images are encoded in such a way that a bit rate increases, it is possible to make a division boundary inconspicuous when decoding is performed and joined images are displayed. However, the entirety of an image increases in a bit rate, and this results in an increase in file size or an increase in a calculation cost.

Accordingly, the present technology proposes a technique for preventing a division boundary from being conspicuous on a display image and preventing an excessive amount of data.

### SOLUTIONS TO PROBLEMS

An encoding device according to the present technology includes: an encoding processing section that performs encoding processing on image data serving as a processing target; and a control unit that controls the encoding processing to make a bit rate in a rate control area higher than a bit rate in an area other than the rate control area, the rate control area being located near a division boundary when the image data serving as the processing target is divided into a plurality of regions.

The rate control area is set as a region near a division boundary at a time when one image is divided. Data that configures this rate control area is caused to have a larger amount of information than an amount of information in another area in the image.

In the encoding device according to the present technology that has been described above, it is conceivable that the encoding processing section performs compression encoding processing, and the control unit issues an instruction to perform the compression encoding processing in the rate control area at a compression ratio that is lower than a compression ratio of the compression encoding processing in the area other than the rate control area.

Stated another way, compression processing is performed on data in the rate control area near the division boundary at a lower compression ratio, and therefore a bit rate increases.

In the encoding device according to the present technology that has been described above, it is conceivable that the control unit performs processing for setting the rate control area on the basis of the division boundary of the image data serving as the processing target.

Stated another way, the rate control area is set by the control unit.

In the encoding device according to the present technology that has been described above, it is conceivable that the control unit performs: setting the division boundary of the image data serving as the processing target, and setting the rate control area on the basis of the division boundary; and issuing an instruction to make the bit rate in the rate control area higher than the bit rate in the area other than the rate control area, and causing the encoding processing section to perform the encoding processing on the image data serving as the processing target.

Stated another way, after the division boundary has been set, and the rate control area has been set, an instruction indicating the rate control area is issued, and encoding processing is performed.

In the encoding device according to the present technology that has been described above, it is conceivable that the control unit performs control to treat the image data on which the encoding processing has been performed as a plurality of pieces of image data obtained by performing division at the division boundary that has been set.

Stated another way, control is performed to store or transmit a plurality of pieces of divided image data after compression processing has been performed on the entirety of original image data.

In the encoding device according to the present technology that has been described above, it is conceivable that the control unit sets the division boundary of the image data serving as the processing target, divides the image data on the basis of the division boundary, sets the rate control area in each divided region, and causes the encoding processing section to perform the encoding processing.

Stated another way, after a division boundary has been set and a region has been divided, a rate control area is set in each divided region, an instruction indicating the rate control area is issued for each of the divided regions, and encoding processing is performed.

In the encoding device according to the present technology that has been described above, it is conceivable that, when it is assumed that a block including a plurality of pieces of pixel data is an encoding processing unit, the rate control area includes at least a plurality of blocks that is in contact with the division boundary.

Stated another way, at least blocks that are in contact with the division boundary are set to be the rate control area, and a bit rate of these blocks are increased.

Note that "in contact with a division boundary" means a state where one side of a block forms the division boundary. Stated another way, a block that is in contact with a division boundary refers to a block on an outer edge in a divided region, and a block that is adjacent to another divided region.

In the encoding device according to the present technology that has been described above, it is conceivable that, when it is assumed that a block including a plurality of pieces of pixel data is an encoding processing unit, the rate control area includes a plurality of block rows that is continuous from a row of a plurality of blocks that is in contact with the division boundary, or a plurality of block columns that is continuous from a column of a plurality of blocks that is in contact with the division boundary.

Stated another way, at least a range of a plurality of rows or columns from a row or column of blocks that are in contact with a division boundary is set to be a rate control area, and a bit rate of these blocks is increased.

In the encoding device according to the present technology that has been described above, it is conceivable that, when it is assumed that a block including a plurality of pieces of pixel data is an encoding processing unit, the control unit performs control to generate, in the rate control area, a plurality of blocks on which compression encoding is performed at a first compression ratio and a plurality of blocks on which the compression encoding is performed at a second compression ratio.

Control is performed in such a way that there are blocks on which an instruction to perform compression encoding at a different compression ratio is issued, among blocks that correspond to the rate control area.

In the encoding device according to the present technology that has been described above, it is conceivable that, when it is assumed that a block including a plurality of pieces of pixel data is an encoding processing unit, the control unit variably sets a plurality of blocks that corresponds to the rate control area.

Stated another way, a rate control area is variably set according to a predetermined algorithm without fixedly setting the rate control area.

In the encoding device according to the present technology that has been described above, it is conceivable that the control unit variably sets a compression ratio that the encoding processing section will be instructed to apply to the rate control area.

Stated another way, a compression ratio of a rate control area is variably set according to a predetermined algorithm without fixedly setting the compression ratio.

In the encoding device according to the present technology that has been described above, it is conceivable that, in a case where the division boundary exists in a horizontal direction and a vertical direction of the image data serving as the processing target, when it is assumed that a block including a plurality of pieces of pixel data is an encoding processing unit, the rate control area is set in such a way that the number of block rows along the division boundary in the horizontal direction is different from the number of block columns along the division boundary in the vertical direction in the rate control area.

Stated another way, the numbers of block rows and block columns that configure a rate control area are made different from each other, and ranges in the horizontal direction and the vertical direction of the rate control area are made different from each other.

In the encoding device according to the present technology that has been described above, it is conceivable that, in a case where the division boundary exists in a horizontal direction and a vertical direction of the image data serving as the processing target, when it is assumed that a block including a plurality of pieces of pixel data is an encoding processing unit, the control unit makes a compression ratio that the encoding processing section will be instructed to apply to a plurality of blocks along the division boundary in the horizontal direction different from a compression ratio that the encoding processing section will be instructed to apply to a plurality of blocks along the division boundary in the vertical direction.

Stated another way, a compression ratio is made different between blocks in a horizontal row and blocks in a vertical column from among blocks that configure a rate control area.

An encoding method according to the present technology includes performing encoding processing on image data serving as a processing target in such a way that a bit rate in a rate control area is higher than a bit rate in an area other than the rate control area, the rate control area being located near a division boundary when the image data is divided into a plurality of regions.

By doing this, data that configures the rate control area has a larger amount of information than an amount of information of another area in an image.

A decoding device according to the present technology includes: a plurality of decoding processing units that performs decoding to correspond to a plurality of pieces of image data serving as a plurality of divided regions that forms one image, encoding processing having been performed on each of the plurality of pieces of image data in such a way that a bit rate in a rate control area is higher than a bit rate in an area other than the rate control area, the rate control area having been set near a division boundary in division; and a display control unit that combines the plurality of pieces of image data obtained by performing the decoding by using the plurality of decoding processing units to form image data that configures the one image, and causes a display to be conducted.

By doing this, pieces of image data in divided regions in which a bit rate is increased in a rate control area are decoded, and are further combined to be joined at division boundaries, and a display is conducted.

### BRIEF DESCRIPTION OF DRAWINGS

Fig. 1 is a block diagram of an image processing apparatus that performs encoding processing according to an embodiment of the present technology.
Fig. 2 is a block diagram of a compression encoder according to an embodiment.
Fig. 3 is an explanatory diagram of an image serving as a processing target and divided regions according to an embodiment.
Fig. 4 is a block diagram of an image processing apparatus that performs decoding processing according to an embodiment.
Fig. 5 is an explanatory diagram of a rate control area according to a first embodiment.
Fig. 6 is a flowchart of encoding processing according to the first embodiment.
Fig. 7 is a flowchart of encoding processing according to a second embodiment.
Fig. 8 is an explanatory diagram of a rate control area according to a third embodiment.
Fig. 9 is an explanatory diagram of a rate control area according to a fourth embodiment.
Fig. 10 is an explanatory diagram of a rate control area according to a fifth embodiment.
Fig. 11 is an explanatory diagram of a rate control area according to a sixth embodiment.
Fig. 12 is an explanatory diagram of a rate control area according to a seventh embodiment.
Fig. 13 is an explanatory diagram of a rate control area according to an eighth embodiment.
Fig. 14 is an explanatory diagram of a rate control area according to a ninth embodiment.
Fig. 15 is an explanatory diagram of another example of divided regions according to an embodiment.

### MODE FOR CARRYING OUT THE INVENTION

Embodiments are described below in the following order.
<1. Configuration of image processing apparatus that performs encoding processing>
<2. Configuration of image processing apparatus that performs decoding processing>
<3. Encoding processing according to first embodiment>
<4. Encoding processing according to second embodiment>
<5. Rate control areas according to third to ninth embodiments>
<6. Summary and variations>

### <1. Configuration of image processing apparatus that performs encoding processing>

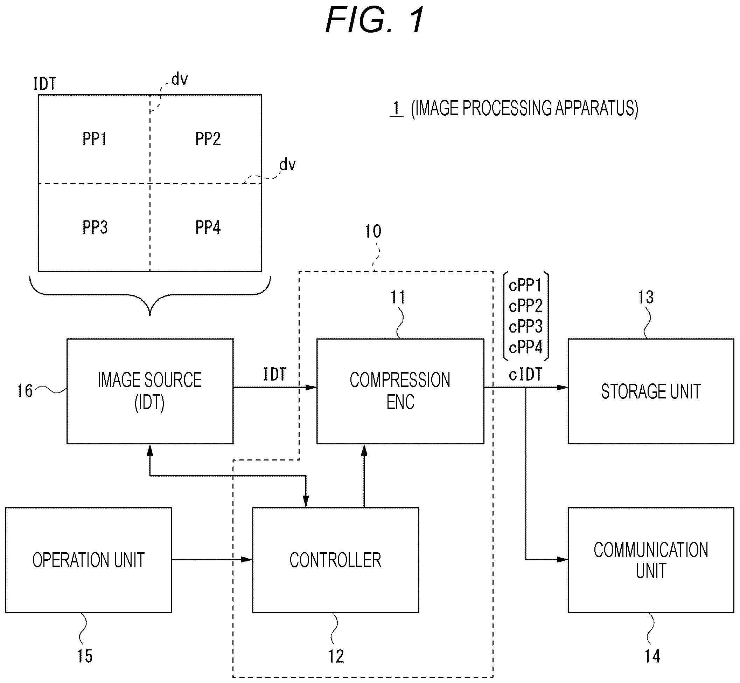

Fig. 1 illustrates a configuration of an image processing apparatus 1 that performs encoding processing on image data. The image processing apparatus 1 includes, for example, an encoding device 10, a storage unit 13, a communication unit 14, an operation unit 15, and an image source 16. In this example, it is assumed that the encoding device 10 includes a compression encoder 11 and a controller 12.

The image source 16 indicates a portion that supplies the encoding device 10 with image data IDT (a moving image or a still image) serving as a processing target of encoding processing. For example, in the image processing apparatus 1, a storage device that stores image data IDT is an example of the image source 16. Furthermore, a reception device of image data that has been transmitted from an external device by wire or wirelessly is also an example of the image source 16. Moreover, for example, a reproduction device that reads image data IDT from a storage medium such as a memory card, an optical disk, or a magnetic tape, a hard disk drive (HDD), and the like are also examples of the image source 16.

Image data IDT from the image source 16 is supplied to the compression encoder 11, and the compression encoder 11 performs image compression encoding.

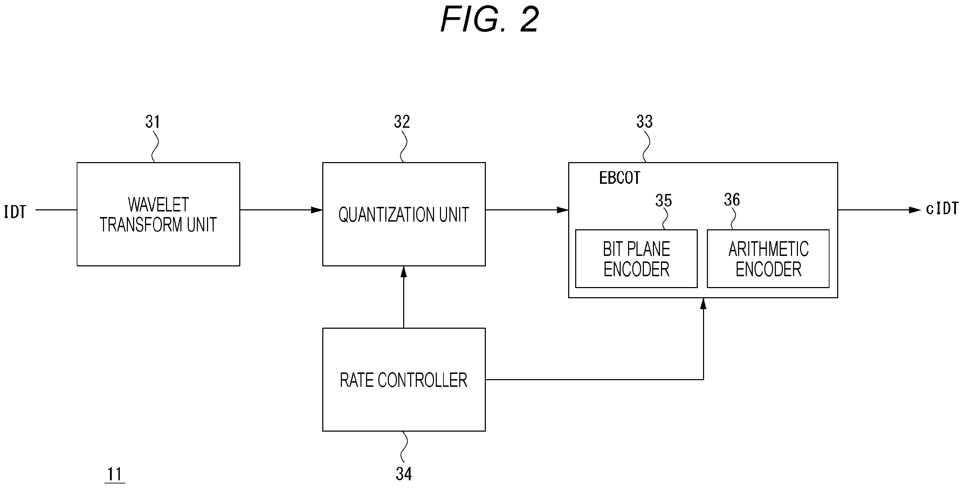

A variety of specific examples of the compression encoder 11 are conceivable, and for example, a configuration example of the compression encoder 11 in a case where compression encoding according to the JPEG 2000 standard is performed is illustrated in Fig. 2.

In the compression encoder 11, a wavelet transform unit 31 performs wavelet transform on input image data IDT, a quantization unit 32 performs quantization processing, and obtained data is input to an embedded block coding with optimal truncation (EBCOT) 33. The EBCOT 33 has a configuration as a bit plane encoder 35 and an arithmetic encoder 36. By employing this configuration, data on which wavelet transform has been performed is quantized, and then the EBCOT 33 performs entropy encoding. Stated another way, the EBCOT 33 performs encoding in the units of a code block serving as a rectangular region defined on a wavelet transform coefficient. Each of the code blocks is decomposed into bit planes by the bit plane encoder 35, and coefficient bit modeling processing is performed to classify the bit planes into three encoding paths. Then, the arithmetic encoder 36 performs compression processing on each of the encoding paths.

Here, the compression encoder 11 has a configuration as a rate controller 34, and the rate controller 34 controls the quantization unit 32 and the EBCOT 33 so that a compression ratio can be set for each data unit of compression processing.

The controller 12 issues, to the rate controller 34, an instruction indicating information relating to a rate control area or a compression ratio. Therefore, in response to the instruction, the rate controller 34 issues an instruction indicating the compression ratio to the quantization unit 32 and the EBCOT 33, and required compression processing is performed.

Note that an example of the compression encoder 11 has been merely described above, and a configuration differs in a case where another compression scheme such as MPEG4, H.264/MPEG-4 AVC, or JPEG is employed.

For example, compressed image data cIDT obtained by performing compression encoding by using such a compression encoder 11 is supplied to the storage unit 13 of Fig. 1, and is stored in a storage medium.

Alternatively, the compressed image data cIDT obtained by performing compression encoding by using the compression encoder 11 can be transmitted to an external device by the communication unit 14.

A variety of forms of the recording unit 13 are conceivable. For example, the recording unit 13 may be a flash memory incorporated into the image processing apparatus 1, or may be a form including an attachable memory card (for example, a portable flash memory) and a card recording/reproducing unit that performs recording/reproducing access to the memory card. Furthermore, in some cases, the recording unit 13 is implemented as an HDD or the like serving as a form incorporated into a body 2.

The communication unit 14 performs data communication or network communication with an external device by wire or wirelessly, and communicates image data with, for example, a display device, a recording device, a reproduction device, or the like on the outside. Furthermore, the communication unit 14 may serve as a network communication unit, and may perform communication via various networks such as the Internet, a home network, or a local area network (LAN) to transmit or receive various types of data to/from a server, a terminal, a cloud server, or the like on the network.

The controller 12 includes a microcomputer (an arithmetic processing device) that includes, for example, a central processing unit (CPU), a read only memory (ROM), a random access memory (RAM), a flash memory, or the like.

The CPU executes a program stored in the ROM, the flash memory, or the like to control compression encoding processing.

The RAM serves as a working area in various types of data processing performed by the CPU, and is used to transitorily store data, a program, or the like.

The ROM or the flash memory (a non-volatile memory) is used to store an operating system (OS) for causing the CPU to control each unit, various processing parameters, a program for various operations, or the like.

In some cases, this controller 12 performs, for example, division setting of image data IDT, setting of a rate control area in the image data IDT, issuing an instruction indicating the rate control area or a compression ratio to the compression encoder 11, or the like.

On the basis of the control described above, as described later, compression encoding processing is performed to make a bit rate in the rate control area higher than a bit rate in an area other than the rate control area in the image data IDT.

The rate control area is a region near a division boundary at a time when image data is divided into a plurality of regions. For example, the rate control area may be fixedly determined, or may be set by the controller 12. Specific examples of the rate control area will be described later.

For example, it is conceived that the controller 12 acquires image data IDT of the image source 16, analyzes the image data IDT, and performs division setting of the image data IDT, setting of a rate control area in the image data IDT, issuing an instruction indicating the rate control area or a compression ratio to the compression encoder 11, or the like in accordance with a result of analyzing the image data IDT.

The operation unit 15 comprehensively indicates an operation device that is used to input an operation performed by a user who uses the image processing apparatus 1. Examples include a keyboard, a mouse, a keyswitch, a touch panel, a sound input unit, a remote operation unit, and the like. A user can input various operations by using these operation devices, and the controller 12 can perform processing according to an operation.

For example, it is also conceived that a user performs issuing an instruction indicating divided regions of image data IDT, or selecting a mode of encoding processing (for example, selecting a scheme of setting a rate control area, selecting a compression ratio, or the like). It is also conceived that the controller 12 performs division setting of the image data IDT, setting of the rate control area in the image data IDT, issuing an instruction indicating the rate control area or the compression ratio to the compression encoder 11, or the like in accordance with these operations performed by the user.

In the present embodiment, compression encoding is performed on image data IDT that forms an image serving, for example, as one still image or moving image. However, in a stage of processing performed by the storage unit 13 or the communication unit 14, it is assumed that pieces of image data obtained by dividing the image data IDT into a plurality of divided regions are handled.

For example, it is assumed that the image data IDT of Fig. 1 is divided into four pieces of divided image data PP1, PP2, PP3, and PP4, and pieces of compressed image data cPP1, cPP2, cPP3, and cPP4 that correspond to these pieces of divided image data PP1, PP2, PP3, and PP4 are stored in the storage unit 13, or are transmitted from the communication unit 14 to an external device.

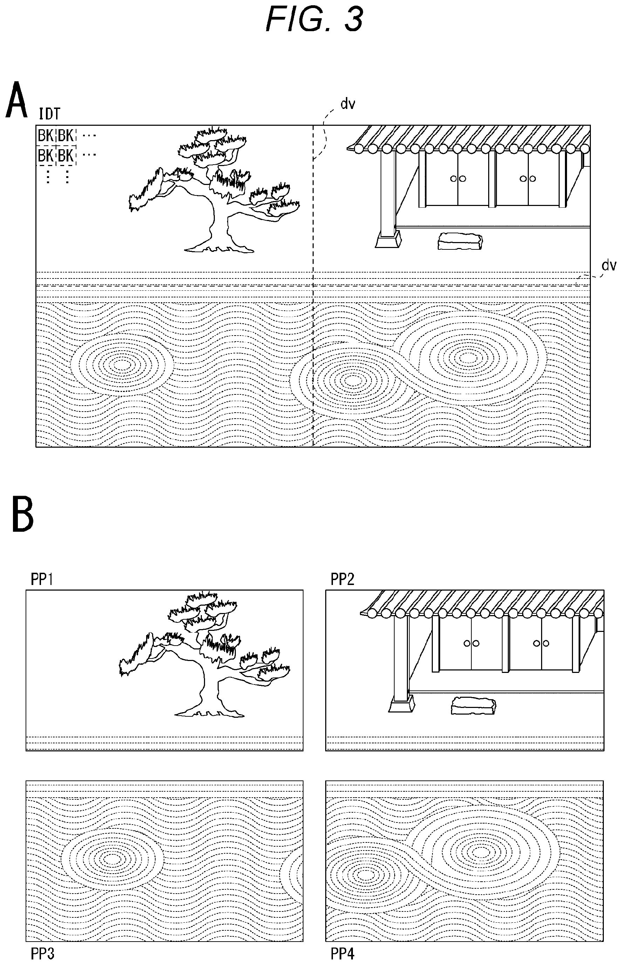

Fig. 3A illustrates an example of image data IDT that configures one image.

For example, it is assumed that this image data has a configuration of 8K × 4K, and includes 8K (7680 pixels) in a horizontal direction and 4K (3840 pixels) in a vertical direction.

At this time, a division boundary dv illustrated with a broken line divides the image data IDT into four divided regions. Images of four pieces of divided image data PP1, PP2, PP3, and PP4 after division are illustrated in Fig. 3B. Each of these pieces of divided image data PP1, PP2, PP3, and PP4 has a configuration of 4K × 2K, and includes 4K (3840 pixels) in the horizontal direction and 2K (1920 pixels) in the vertical direction.

For example, by generating pieces of compressed image data cIDT (cPP1, cPP2, cPP3, and cPP4) obtained by performing compression encoding on the pieces of divided image data PP1, PP2, PP3, and PP4 of 4K × 2K, as described above, a commonly used decoder that copes with 4K × 2K can be used in decoding. In other words, division has an advantage in which a decoder that copes with a general image at a current point in time (a commonly used decoder) can be used, for example, for image data that configures a larger screen.

### <2. Configuration of image processing apparatus that performs decoding processing>

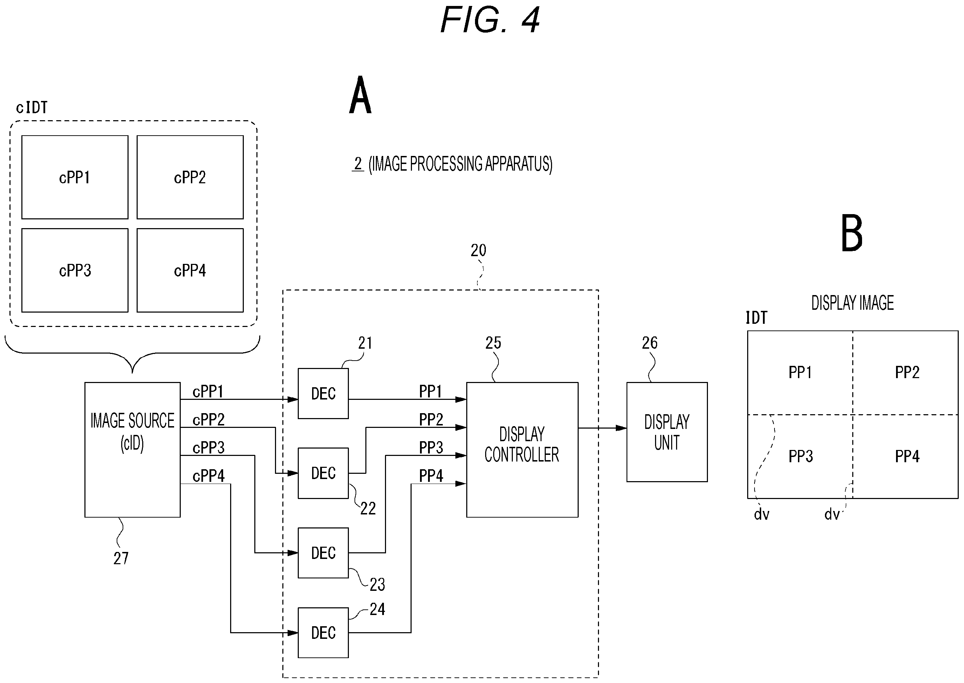

A configuration example of an image processing apparatus 2 that receives, as an input, compressed image data cIDT obtained by performing compression encoding by using the image processing apparatus 1 described above (for example, four pieces of compressed image data cPP1, cPP2, cPP3, and cPP4) and performs decoding to display an image is illustrated in Fig. 4A.

The image processing apparatus 2 includes a decoding device 20, a display unit 26, and an image source 27. In this example, it is assumed that the decoding device 20 includes four decoders 21, 22, 23, and 24 and a display controller 25.

The image source 27 indicates a portion that supplies the decoding device 20 with compressed image data cIDT serving as a processing target of decoding processing. For example, in the image processing apparatus 2, a storage device that stores compressed image data cIDT is an example of the image source 27. Furthermore, a reception device of image data that has been transmitted from an external device by wire or wirelessly is also an example of the image source 27. Moreover, for example, a reproduction device that reads image data IDT from a storage medium such as a memory card, an optical disk, or a magnetic tape, a hard disk drive (HDD), and the like are also examples of the image source 27.

This image source 27 respectively supplies, for example, four divided pieces of compressed image data cPP1, cPP2, cPP3, and cPP4 to the four decoders 21, 22, 23, and 24 in parallel.

As described above, in a case where pieces of divided image data PP1, PP2, PP3, and PP4 are pieces of image data of 4K × 2K, each of the decoders 21, 22, 23, and 24 is a decoder that copes with 4K × 2K, and performs decoding conforming to, for example, the JPEG 2000 standard. Needless to say, this is an example, and it is natural that a decoder that corresponds to encoding be employed.

The decoders 21, 22, 23, and 24 respectively decompress and decode the pieces of compressed image data cPP1, cPP2, cPP3, and cPP4 in one-to-one correspondence, and pieces of divided image data PP1, PP2, PP3, and PP4 are obtained as a decoding result.

These pieces of divided image data PP1, PP2, PP3, and PP4 are supplied to the display controller 25.

The display controller 25 combines the pieces of divided image data PP1, PP2, PP3, and PP4 to generate original image data IDT, and drives the display unit 26 to conduct a display on the basis of the image data IDT.

By doing this, an image of the original image data IDT obtained by joining and combining the pieces of divided image data PP1, PP2, PP3, and PP4, as illustrated in Fig. 4B, is displayed on the display unit 26.

It is conceived that the display unit 26 is a display device that uses, for example, a spontaneous light-emitting element such as an LED as a pixel. Needless to say, the LED is not restrictive, and another display device, such as a display using an organic EL element, may be employed.

Moreover, a display device that is the spontaneous light-emitting display device described above and configures a screen by arranging units for each predetermined pixel in a tile shape, such as a device called a tiling device, is conceived of.

Then, in the present embodiment, in particular, a display device that does not conduct an overlapping display that would be conducted by a projector in a portion where images are joined is conceived of as the display device.

### <3. Encoding processing according to first embodiment>

As described above, the image processing apparatus 1 (the encoding device 10) divides original image data IDT, and generates compressed image data cIDT (cPP1, cPP2, cPP3, or cPP4) for each divided region.

Furthermore, the image processing apparatus 2 (the decoding device 20) decodes, combines, and displays respective pieces of compressed image data cIDT (cPP1, cPP2, cPP3, and cPP4) .

By doing this, a reproduction system can be formed for a large image of, for example, 8K × 4K, by using, for example, a decoder of 4K × 2K.

However, in this case, a situation where a portion where images are joined (that is, a portion of a division boundary dv) is conspicuous and image quality decreases occurs in some cases.

Conceivable reasons for this are that, when compression encoding is performed to decrease a bit rate, a compression error increases as a compression ratio is increased and a bit rate is decreased, and that in a portion near the division boundary dv, an error in a divided region of one image and an error in a divided region of another image synergistically affect each other and a large difference is generated between the images.

In particular, in an image having a small difference in luminance or color (for example, an image of sand in a garden, as illustrated in Fig. 3, an image of the sea or the sky, or the like), a joint portion is more conspicuous than in a complicated image having a great change in luminance or color.

Accordingly, in the present embodiment, encoding processing is performed in such a way that a bit rate in a rate control area serving as the vicinity of a division boundary dv is higher than a bit rate in an area other than the rate control area.

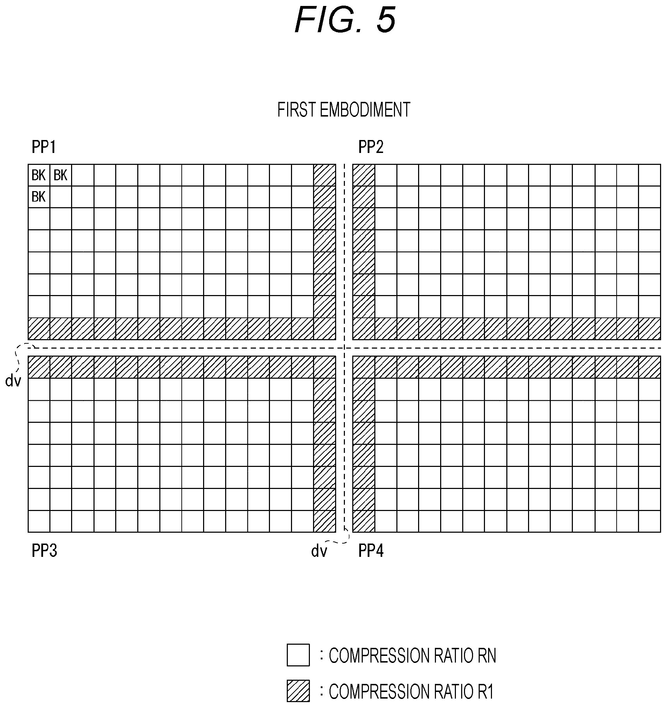

An example of the rate control area is illustrated in Fig. 5.

Fig. 5 illustrates pieces of divided image data PP1, PP2, PP3, and PP4 after division at a division boundary dv.

One frame sectioned with a line is a block BK. The block BK is a unit of compression processing, and is, for example, 8 × 8 pixels. This is an example, and the block BK serving as a unit of compression processing may be 2 × 2 pixels, 4 × 4 pixels, 16 × 16 pixels, or the like.

Note that the characters "BK" are only illustrated in part of the drawing in order to avoid complication of the drawing.

Furthermore, in consideration of visibility of the drawing, the pieces of divided image data PP1, PP2, PP3, and PP4 are illustrated to be spaced apart from each other. However, as is obvious with reference to Figs. 3A and 3B, in consideration from the viewpoint of original image data IDT, hatched blocks are blocks adjacent to each other, and a boundary between these blocks BK is the division boundary dv.

Here, it is assumed that a range of hatched blocks BK is a rate control area.

In the case of this example of Fig. 5, it is assumed that a range of blocks BK in each one row on an upper or lower side along a division boundary dv in a horizontal direction and blocks BK in each one column on a left-hand or right-hand side along a division boundary dv in a vertical direction is the rate control area.

For convenience of description, an area other than the rate control area is referred to as a "normal processing area". A range of blocks BK without a hatched part is the normal processing area.

Furthermore, in the description below, it is assumed that a "row" or "column" indicates arrangement in the horizontal direction of blocks BK or arrangement in the vertical direction section.

Then, in this case, it is assumed that compression encoding is performed at a compression ratio RN in the normal processing area, and compression encoding is performed at a compression ratio R1 in the rate control area. RN > R1 is established.

The compression ratio RN may also be considered to be a compression ratio that would originally be applied to the entirety of an image.

Stated another way, in the normal processing area, an object of compression is to decrease a bit rate to a certain degree by performing compression encoding at the compression ratio RN; however, in the rate control area, compression encoding is performed at the compression ratio R1 that is lower than the compression ratio RN, and therefore a bit rate is made higher than a bit rate in the normal processing area.

By doing this, a compression error is suppressed at the division boundary dv. A compression error is suppressed in each of the blocks BK in the rate control area that is in contact with the division boundary dv, and this eliminates a situation where errors are accumulated and a joint portion is conspicuous in a combined display.

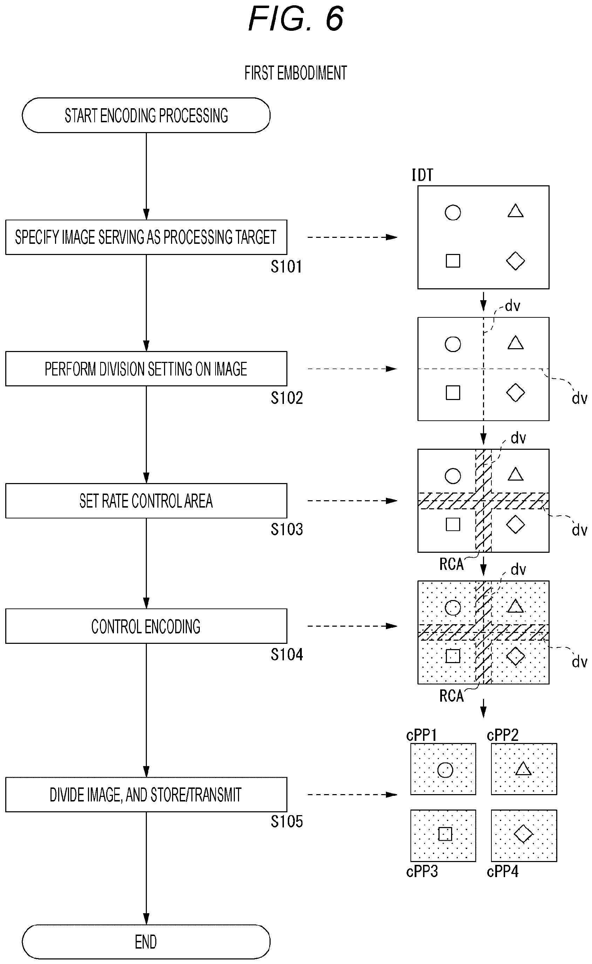

A processing example of the controller 12 that causes the compression encoder 11 to perform such encoding processing is illustrated in Fig. 6. Note that Fig. 6 schematically illustrates a state of image data on a right-hand side of each step.

The controller 12 specifies image data IDT serving as a processing target in step S101. Stated another way, image data IDT to be transferred from the image source 16 to the compression encoder 11 is specified.

In step S102, the controller 12 performs division setting on the image data IDT that has been determined to be a processing target. Stated another way, a division boundary dv is set to divide the image data IDT into some divided regions.

In step S103, the controller 12 sets a rate control area RCA (a hatched part) with the division boundary dv as a reference. For example, as illustrated in Fig. 5, a range of blocks in one row and one column that are in contact with the division boundary dv is set to be the rate control area RCA.

In step S104, the controller 12 causes the compression encoder 11 to perform compression encoding on the image data IDT. At this time, the controller 12 reports, to the compression encoder 11, blocks BK that correspond to the rate control area RCA, and instructs the compression encoder 11 to perform compression encoding on blocks BK in a normal processing area at the compression ratio RN and perform compression encoding on the blocks BK that correspond to the rate control area RCA at the compression ratio R1. In the compression encoder 11, for example, the rate controller 34 receives this instruction, and causes the quantization unit 32 and the EBCOT 33 to perform compression encoding on each of the blocks at a compression ratio according to the instruction.

If compression encoding has been performed, in step S105, the controller 12 divides an image at the division boundary dv, and performs control to store compressed image data cIDT (for example, compressed image data cPP1, cPP2, cPP3, or cPP4) of each divided image to be stored in the storage unit 13 or transmit the compressed image data cIDT to an external device via the communication unit 14.

By doing the above, compressed image data cIDT in which a bit rate has been increased in the rate control area RCA is obtained.

Such pieces of compressed image data cIDT are decoded and combined by the image processing apparatus 2 having, for example, the configuration of Fig. 4, and an image of original image data IDT is displayed. At this time, a situation where a joint portion is conspicuous at the division boundary dv has been eliminated.

### <4. Encoding processing according to second embodiment>

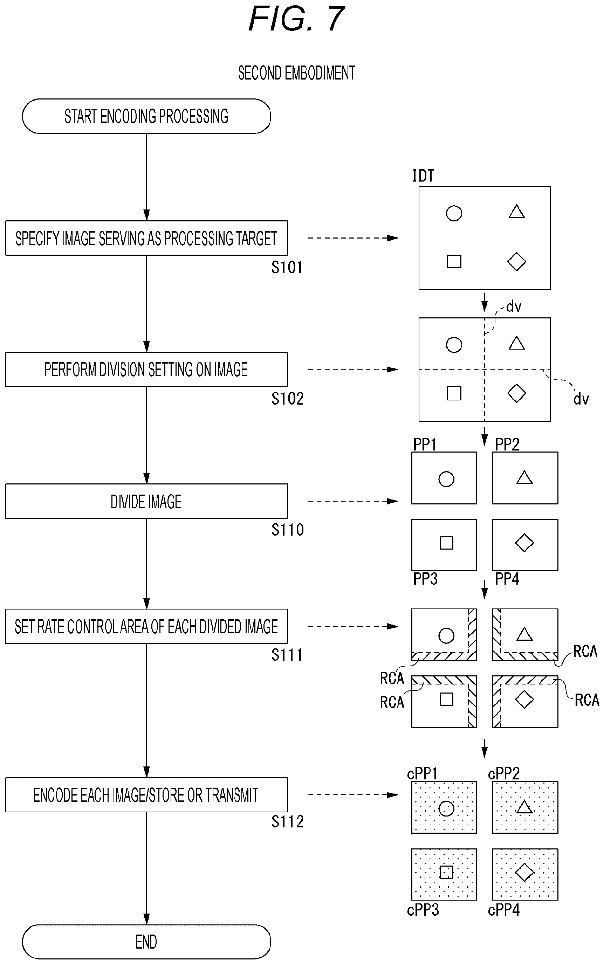

A processing example of the controller 12 serving as a second embodiment is illustrated in Fig. 7. In Fig. 7, similarly, a state of image data is schematically illustrated on a right-hand side of each step.

The controller 12 specifies image data IDT serving as a processing target in step S101.

Then, in step S102, the controller 12 performs division setting on the image data IDT that has been determined to be a processing target. Stated another way, a division boundary dv is set to divide the image data IDT into some divided regions. The above is similar to the processing of Fig. 6.

Next, the controller 12 divides an image in step S110. Stated another way, the controller 12 divides the image data IDT on the basis of the division boundary dv, and forms divided image data PP1, PP2, PP3, or PP4 for each divided region.

In step S111, the controller 12 sets a rate control area RCA (a hatched part) with the division boundary dv as a reference.

In this case, division has already been performed to form pieces of divided image data PP1, PP2, PP3, and PP4. Therefore, in each of the pieces of divided image data PP1, PP2, PP3, and PP4, a range of blocks BK in one row and one column that are in contact with the division boundary dv is set to be the rate control area RCA, as illustrated, for example, in Fig. 5.

In step S112, the controller 12 causes the compression encoder 11 to sequentially perform compression encoding on the pieces of divided image data PP1, PP2, PP3, and PP4. At this time, the controller 12 reports the rate control area RCA for each of the pieces of divided image data PP1, PP2, PP3, and PP4, and instructs the compression encoder 11 to perform compression encoding on blocks BK in a normal processing area at the compression ratio RN and perform compression encoding on blocks BK that correspond to the rate control area RCA at the compression ratio R1.

Moreover, the controller 12 instructs the compression encoder 11 to transfer compressed image data cIDT (cPP1, cPP2, cPP3, or cPP4) to the storage unit 13 or the communication unit 14 upon completion of compression processing.

In the compression encoder 11, for example, in a case where the divided image data PP1 is compressed, under the control of the rate controller 34, compression processing is performed in such a way that a compression ratio is decreased for blocks BK in the rate control area RCA in the divided image data PP1. Then, the compressed image data cPP1 is transferred to the storage unit 13, and is stored in the storage unit 13. Alternatively, the compressed image data cPP1 is transferred to the communication unit 14, and is transmitted to an external device.

Such processing is sequentially performed on pieces of divided image data PP2, PP3, and PP4.

By doing the above, compressed image data cIDT (cPP1, cPP2, cPP3, or cPP4) in which a bit rate has been increased in the rate control area RCA is obtained.

Such pieces of compressed image data cIDT are decoded and combined by the image processing apparatus 2 having, for example, the configuration of Fig. 4, and an image of original image data IDT is displayed. At this time, a situation where a joint portion is conspicuous at the division boundary dv has been eliminated.

### <5. Rate control areas according to third to ninth embodiments>

Examples of setting a rate control area are described below as third to eighth embodiments. Note that each drawing illustrates a rate control area as a range of hatched blocks BK in a state where pieces of divided image data PP1, PP2, PP3, and PP4 are separated from each other, similarly to Fig. 5.

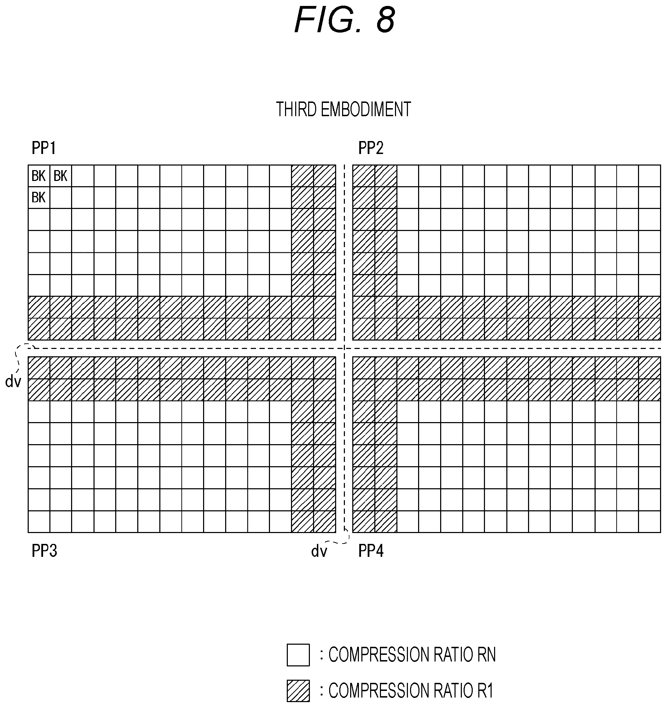

A rate control area according to the third embodiment is illustrated in Fig. 8.

Fig. 8 illustrates an example where a range of a plurality of block rows (in this case, each two rows on an upper or lower side) that is continuous from a row of blocks (arrangement in the horizontal direction of blocks BK) that are in contact with a division boundary dv in the horizontal direction and a plurality of block columns (in this case, each two columns on a left-hand or right-hand side) that is continuous from a column of blocks (arrangement in the vertical direction of blocks BK) that are in contact with a division boundary dv in the vertical direction has been set to be a rate control area. Stated another way, in each of the pieces of divided image data PP1, PP2, PP3, and PP4, a range of two rows and two columns on sides of the division boundaries dv is the rate control area.

Note that, from the viewpoint of original image data IDT, a range of four rows and four columns across the division boundaries dv is the rate control area. However, in the description below, in consideration of the divided image data PP1, PP2, PP3, or PP4 as a unit, and the example of Fig. 8 is described by using the expression "two rows and two columns".

As illustrated as two rows and two columns in Fig. 8, the rate control area may be set within a range of a plurality of rows and a plurality of columns when viewed from the division boundaries dv. Needless to say, two rows and two columns are an example, and three rows and three columns, four rows and four columns, or a certain number of rows and a certain number of columns that is greater than 4 are also conceivable.

Then, as described above, in a rate control area including a plurality of rows and a plurality of columns, compression encoding is performed at the compression ratio R1 that is lower than a compression ratio in a normal processing area, and a bit rate is increased in comparison with the normal processing area.

Widening the rate control area is effective to eliminate conspicuousness of a joint portion.

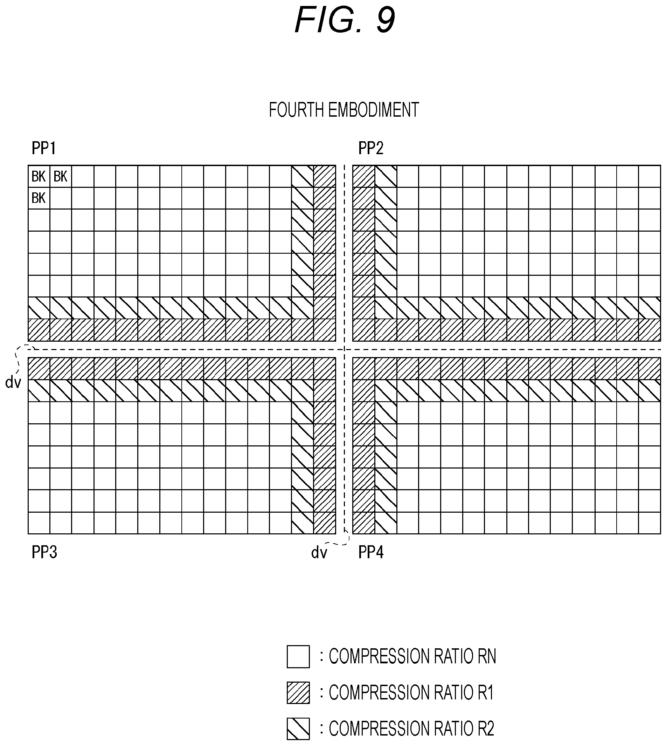

A rate control area according to the fourth embodiment is illustrated in Fig. 9.

In Fig. 9, similarly, a range of a plurality of block rows (in this case, each two rows on an upper or lower side) that is continuous from a row of blocks that are in contact with a division boundary dv in the horizontal direction and a plurality of block columns (in this case, each two columns on a left-hand or right-hand side) that is continuous from a column of blocks that are in contact with a division boundary dv in the vertical direction has been set to be a rate control area.

However, even in the rate control area, regions that have compression ratios different from each other are set.

For example, blocks BK that are in contact with a division boundary dv have been determined to be a region having the compression ratio R1, and blocks BK in a second row or a second column when viewed from the division boundary dv that are not in contact with the division boundary dv have been determined to a region having a compression ratio R2. In this case, RN > R2 > R1 is established.

Stated another way, setting is performed in such a way that blocks BK that are closest to the division boundary dv have a higher bit rate, and a bit rate decreases as the division boundary dv is located farther.

Fig. 9 illustrates an example where two stages of compression ratios, the compression ratios R1 and R2, are set. However, three stages, four stages, or the like of compression ratios can be set so that a bit rate decreases in a larger number of stages as the division boundary dv is located farther.

For example, blocks in six rows and six columns may be set to be the rate control area, and as the division boundary dv is located farther in units of two rows and two columns, a compression ratio may be gradually increased in the order of compression ratios R1, R2, and R3 (however, RN > R3 > R2 > R1) .

As described above, a variety of examples of a change width and the number of stages of a compression ratio between the compression ratio R1 of blocks that are closest to the division boundary dv and the compression ratio RN of the normal processing area, and the number of rows/columns having each of the compression ratios are conceivable.

In conclusion, in the case of this fourth embodiment, a bit rate is set to gradually increase as a division boundary dv is located closer. This is also effective to make a joint portion of images inconspicuous.

Needless to say, in a case where compression ratios different from each other are set even in the rate control area, as described above, the controller 12 issues, to the compression encoder 11, an instruction indicating the compression ratios R1, R2, ..., blocks BK having the compression ratio R1, blocks BK having the compression ratio R2, ... as information relating to the rate control area.

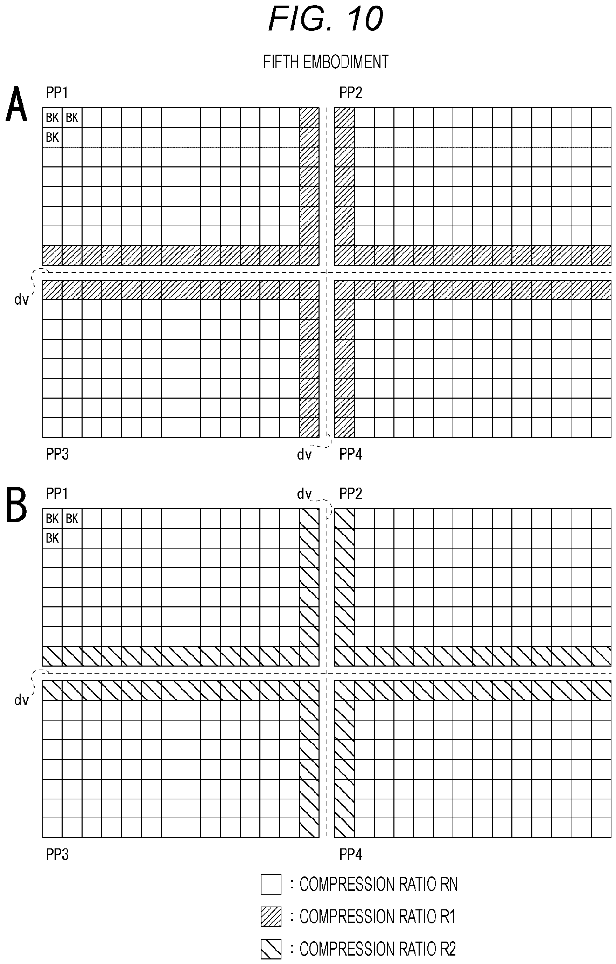

A rate control area according to the fifth embodiment is illustrated in Figs. 10A and 10B.

This is an example where a rate control area is set to be one row and one column from a division boundary dv, for example, as illustrated in Figs. 10A and 10B (or a plurality of rows and a plurality of columns may be set), but a compression ratio to be applied is switched.

For example, in Fig. 10A, the compression ratio R1 is applied to blocks BK in the rate control area, but in Fig. 10B, the compression ratio R2 is applied to the blocks BK in the same rate control area.

As described above, the controller 12 does not change setting of the rate control area, but changes a compression ratio to be applied to the rate control area.

For example, it is conceivable that a compression ratio is variably set according to the content of an image of image data IDT.

As described above, there is a tendency for an image having a smaller change in luminance or color to have a more conspicuous joint portion. Accordingly, the controller 12 analyzes image data IDT, and determines a tendency to change in luminance or color, in particular, around a division boundary dv. Then, it is conceivable, for example, that in the case of an image having a larger change, originally, a joint portion is not so conspicuous, and therefore the compression ratio R2 that is relatively higher is applied, as illustrated in Fig. 10B, but in the case of an image that has a smaller change and is smooth, a joint portion is conspicuous, and therefore the compression ratio R1 that is lower (a higher bit rate) is applied, as illustrated in Fig. 10A.

Furthermore, a compression ratio for the rate control area may be variably set according to a requested size of data. In a case where it is requested that a size of data be decreased as much as possible, for example, the compression ratio R2 that is relatively high (a lower bit rate) is selected, as illustrated in Fig. 10B.

Furthermore, it is also conceivable that the controller 12 selects a compression ratio for the rate control area in accordance with a user's operation. For example, a user issues an instruction indicating a more desirable one of eliminating conspicuousness of a joint portion and a reduction in an amount of data. In response to this, the controller 12 selects a compression ratio.

Note that, in the rate control area, a compression ratio may be variably set in three or more stages rather than in two stages, the compression ratios R1 and R2.

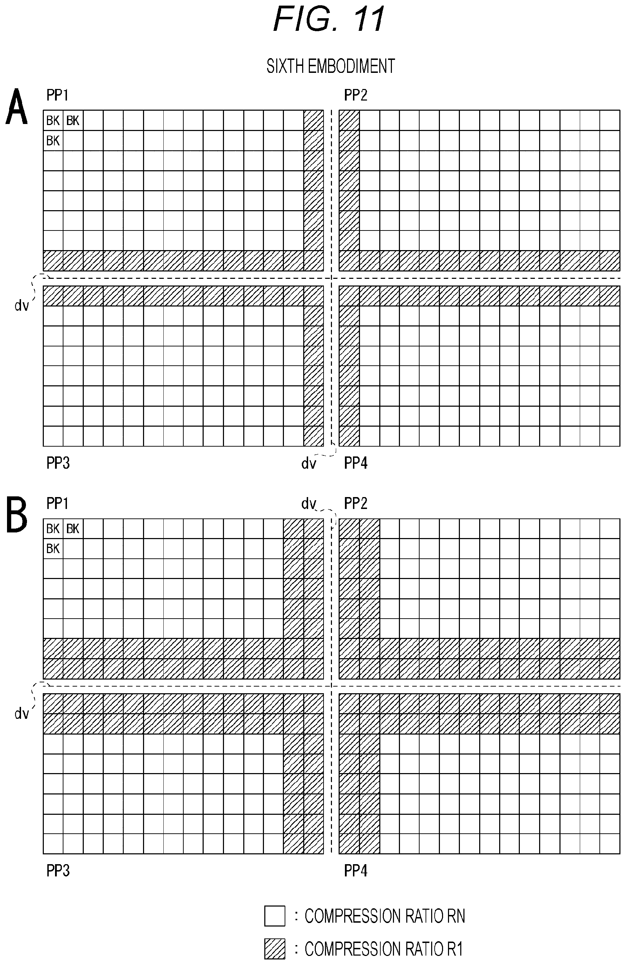

A rate control area according to the sixth embodiment is illustrated in Figs. 11A and 11B.

This is an example where a range of a rate control area is switched, for example, as illustrated in Figs. 11A and 11B. In Fig. 11A, one row and one column from a division boundary dv are set to be the rate control area. In contrast, in Fig. 11B, two rows and two columns from the division boundary dv are set to be the rate control area.

In this case, similarly, it is assumed that the controller 12 variably sets a range of the rate control area, for example, in accordance with a result of analyzing an image of image data IDT or a user's operation.

Fig. 11B is more advantageous for eliminating conspicuousness of a joint portion than Fig. 11A. On the other hand, Fig. 11A is more advantageous for reducing an amount of data than Fig. 11B.

Note that one row and one column or two rows and two columns have been selected for the rate control area, but this is an example. For example, an example where two rows and two columns or five rows and five columns are selected is also conceivable.

Furthermore, a range of the rate control area can be selected in a larger number of stages. For example, two rows and two columns, five rows and five columns, or seven rows and seven columns can be selected.

Needless to say, the numbers of selectable rows and columns are not particularly limited, and appropriate numbers of rows and columns may be set to be the rate control area in accordance with image analysis, a user's input, or the like.

Furthermore, it is also desirable that the range of the rate control area be changed, for example, in accordance with the content of an image. For example, it is conceivable that the number of rows or the number of columns is set according to a range of the smooth content of an image, for example, near a division boundary dv.

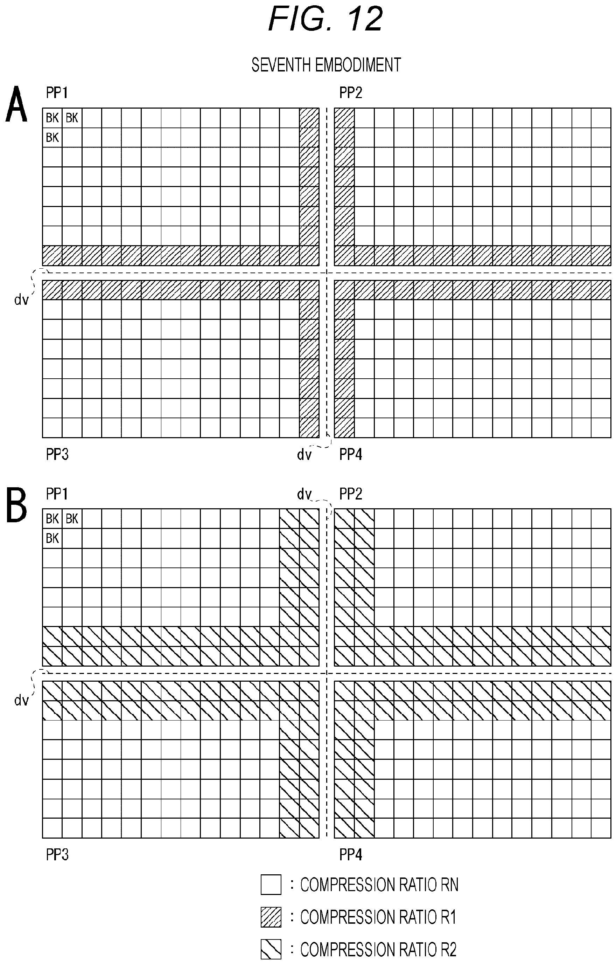

A rate control area according to the seventh embodiment is illustrated in Figs. 12A and 12B. This is a combination of concepts according to the fifth and sixth embodiments.

This is an example where a range of a rate control area is switched, for example, as illustrated in Figs. 12A and 12B, and Fig. 12A illustrates an example where one row and one column from a division boundary dv are set to be a rate control area and the compression ratio R1 is applied. In contrast, Fig. 12B illustrates an example where two rows and two columns from the division boundary dv are set to be the rate control area and the compression ratio R2 is applied.

It is assumed that the controller 12 variably sets a range of the rate control area and a compression ratio, for example, in accordance with a result of analyzing an image of image data IDT or a user's operation.

This enables compression encoding that matches the content of an image or an object of processing.

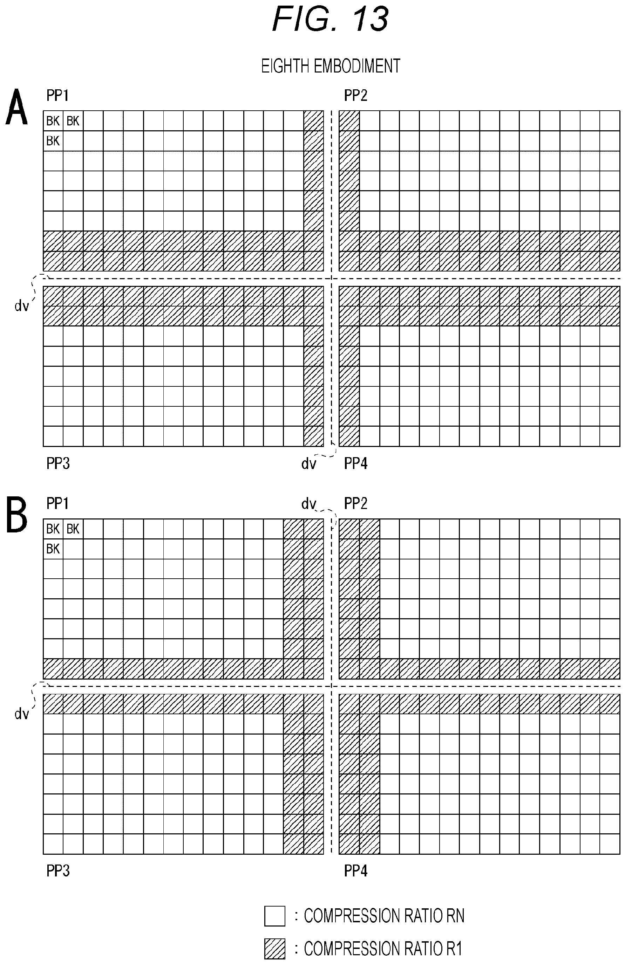

A rate control area according to the eighth embodiment is illustrated in Figs. 13A and 13B.

This is also an example where a range of a rate control area is switched, for example, as illustrated in Figs. 13A and 13B, and in Fig. 13A, two rows from a division boundary dv in the horizontal direction section and one column from a division boundary dv in the vertical direction are set to be the rate control area. In contrast, in Fig. 13B, one row from the division boundary dv in the horizontal direction section and two columns from the division boundary dv in the vertical direction are set to be the rate control area.

Stated another way, the range of the rate control area are variable in the horizontal direction and the vertical direction.

For example, Fig. 13A is effective in the case of an image in which a joint portion in the horizontal direction is conspicuous. Then, in this case, a reduction in the number of columns in the rate control area contributes to a reduction in an amount of data.

Furthermore, Fig. 13B is effective in the case of an image in which a joint portion in the vertical direction is conspicuous. Then, in this case, a reduction in the number of rows in the rate control area contributes to a reduction in an amount of data.

As described above, which direction of the horizontal direction and the vertical direction a rate control area for eliminating a joint portion will be widened in is made variable in accordance with the content of an image, and this can contribute to elimination of conspicuousness of the joint portion and a reduction in an amount of data.

Note that it is also conceivable that this concept is further developed, and the rate control area is set to only include a block row along the division boundary dv in the horizontal direction, or in contrast, the rate control area is set to only include a block column along the division boundary dv in the vertical direction.

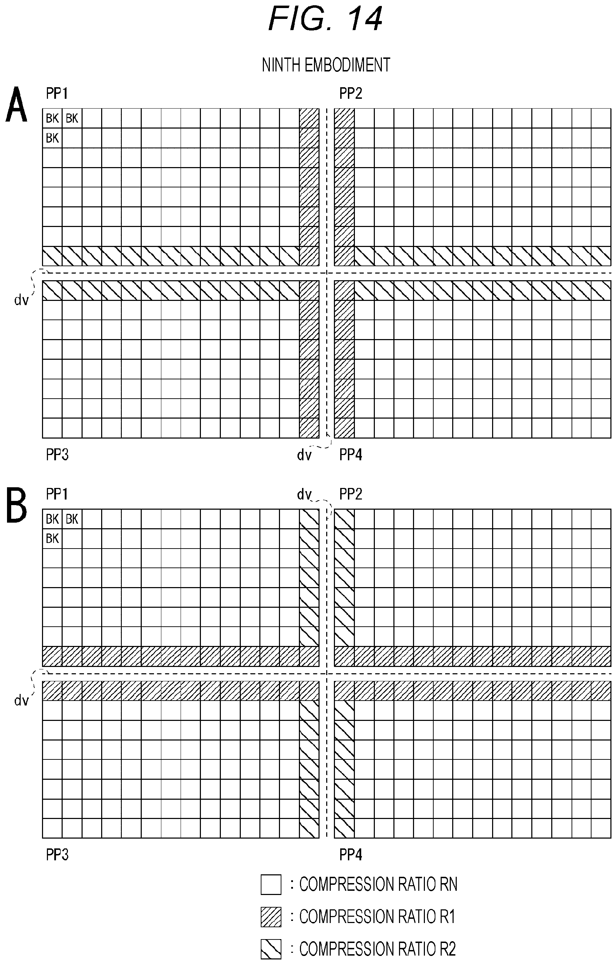

A rate control area according to the ninth embodiment is illustrated in Figs. 14A and 14B.

This is an example where a compression ratio of a rate control area is switched. In Fig. 14A, the compression ratio R2 is applied to blocks BK along the division boundary dv in the horizontal direction section, and the compression ratio R1 is applied to blocks BK along the division boundary dv in the vertical direction.

In Fig. 14B, the compression ratio R1 is applied to the blocks BK along the division boundary dv in the horizontal direction section, and the compression ratio R2 is applied to the blocks BK along the division boundary dv in the vertical direction.

Note that, in both cases, both the compression ratios R1 and R2 are conceivable as a compression ratio for a block BK at a corner along both horizontal and vertical division boundaries dv. However, connecting points are concentrated, and therefore it is desirable that the compression ratio R1 that is lower be applied and a bit rate is increased.

In this case, Fig. 14B is effective, for example, in the case of an image in which a joint portion in the horizontal direction is conspicuous, and Fig. 14A is effective in the case of an image in which a joint portion in the vertical direction is conspicuous. In each of the cases, an increase in a compression ratio (a decrease in a bit rate) in another direction contributes to a reduction in an amount of data.

Note that a combination of the concept of Figs. 13A and 13B and the concept of Figs. 14A and 14B is also conceivable. Stated another way, it is assumed that the number of rows and the number of columns in the horizontal and vertical directions are switched, as illustrated in Figs. 13A and 13B, and a compression ratio is also switched for a block row in the horizontal direction and a block column in the vertical direction. Examples include a case where in a certain case, a rate control area is set to include two rows and one column, the compression ratio R1 is applied to the two rows, and the compression ratio R2 is applied to the one column, and in another certain case, the rate control area is set to include one row and two columns, the compression ratio R2 is applied to the one row, and the compression ratio R1 is applied to the two columns, and other cases. Needless to say, switching may be performed in a larger number of stages.

Rate control areas according to various embodiments, and variations thereof have been described above. However, various other examples of setting a rate control area are conceivable. A combination of a plurality of examples of the respective examples of Figs. 5, 8, 9, 10A, 10B, 11A, 11B, 12A, 12B, 13A, 13B, 14A, and 14B is also conceived of.

These respective examples can also be applied to a case where the setting of a rate control area or a compression ratio is switched according to the content of an image, a user's input, or the like.

Moreover, in the respective examples described above, the rate control area has been set similarly (according to a similar rule) in each of the pieces of divided image data PP1, PP2, PP3, and PP4, but the pieces of divided image data may have ranges of the rate control area or compression ratios that are different from each other.

Examples include a case where the rate control area is set to include one row and one column in the divided image data PP1, and the rate control area is set to include two rows and one column in the divided image data PP3, and other cases.

Alternatively, it is also conceivable that in the divided image data PP1, the rate control area is set to include one row and one column and have the compression ratio R1, and in the divided image data PP3, the rate control area is set to include two rows and one column and have the compression ratio R2.

Furthermore, in the embodiments described above, a case where original image data IDT is divided into four pieces, for example, as illustrated in Figs. 3A and 3B has been described. However, a variety of examples of the number of divided pieces or a position of a division boundary dv are conceivable.

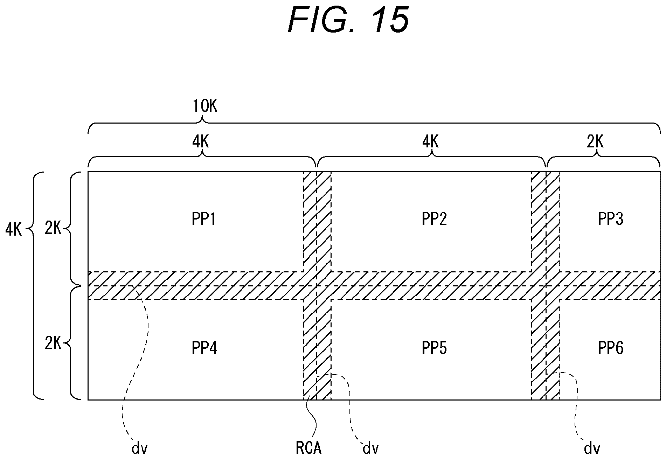

For example, Fig. 15 illustrates image data having a size of 10K × 4K.

A division boundary dv that divides this into pieces of divided image data PP1, PP2, PP3, PP4, PP5, and PP6 is set. In this case, each of the pieces of divided image data PP1, PP2, PP4, and PP5 is image data of 4K × 2K, and each of the pieces of divided image data PP3 and PP6 is image data of 2K × 2K. In a case where such division is performed, similarly, a rate control area RCA illustrated as a hatched part is set, and within the range, a compression ratio is decreased in such a way that a bit rate is increased. This enables conspicuousness of a joint portion to be eliminated, when decoding is performed and a display is conducted.

### <6. Summary and variations>

According to the embodiments described above, the following effects can be exhibited.

An encoding device 10 according to an embodiment includes: a compression encoder 11 (an encoding processing section) that performs encoding processing on image data serving as a processing target; and a controller 12 (a control unit) that controls the encoding processing to make a bit rate in a rate control area higher than a bit rate in an area other than the rate control area (a normal processing area), the rate control area being located near a division boundary when the image data serving as the processing target is divided into a plurality of regions.

By doing this, data that configures the rate control area has a larger amount of information than an amount of information of the normal processing area in an image. If images obtained by performing compression encoding in a state where an image has been divided are decoded and combined, a joint portion of the images is conspicuous in a boundary portion of the images in some cases. However, a bit rate is increased for a rate control area near a division boundary dv, and this can prevent the joint portion from being conspicuous. By doing this, an image processing system that divides, encodes, and decodes an image can be caused to display a high-grade image.

This is preferable, in particular, in a largescreen display in a spontaneous light-emitting type display device such as an LED display.

In the encoding device 10 according to the embodiment, the compression encoder 11 performs compression encoding processing, and the controller 12 issues an instruction to perform compression encoding processing in the rate control area at a compression ratio that is lower than a compression ratio for the normal processing area.

Stated another way, compression processing is performed on data in the rate control area near the division boundary at a lower compression ratio, and therefore a bit rate increases.

In the normal processing area, compression is performed at a compression ratio RN that is relatively high, and in the rate control area, compression is performed at a compression ratio R1 or R2 that is relatively low. By doing this, with regard to an amount of data after compression, a bit rate of image data increases in the rate control area.

If the bit rate is low, a compression error is conspicuous. The error becomes more serious near the division boundary, and this results in the occurrence of a phenomenon in which a joint portion is visible. Accordingly, a compression ratio is decreased, an amount of data is increased, and the compression error is reduced. This can avoid a phenomenon in which a joint portion is conspicuous in a display image after decoding and combining.

Note that, in the embodiment, the controller 12 performs control processing, as illustrated in Fig. 6 or 7. However, in the compression encoder 11, for example, a rate controller 34 may perform the processing.

In the processing described as the first or second embodiment (see Figs. 6 and 7), the controller 12 performs processing for setting a rate control area on the basis of a division boundary of image data serving as a processing target (S103 or S111).

For example, the rate control area may be regularly set to include, for example, blocks in x rows or y columns from a division boundary dv, or may be variably set according to a user's operation or the content of an image. Flexible processing setting can be performed by setting a rate control area as processing performed by the controller 12.

Note that the rate control area may be fixedly set according to a size of an image, a size of a block BK, or the like.

In the first embodiment, the controller 12 sets a division boundary dv of image data serving as a processing target (S102 in Fig. 6), sets a rate control area on the basis of the division boundary (S103), issues an instruction to make a bit rate in the rate control area higher than a bit rate in a normal processing area, and causes the compression encoder 11 to perform encoding processing on the image data IDT serving as the processing target (S104).

Stated another way, after the division boundary dv has been set, and the rate control area has been set, an instruction indicating the rate control area is issued, and encoding processing is performed. By doing this, compression encoding is performed in such a way that the rate control area has a different compression ratio.

In this case, a region of original image data can be arbitrarily divided, and therefore a division boundary can be set according to a device or a circuit configuration of a decoding system or a display system. In this case, a rate control area can be appropriately set.

Furthermore, in the first embodiment, an example where the controller 12 performs control in such a way that image data on which encoding processing has been performed is treated as a plurality of pieces of image data obtained by performing division at a set division boundary has been described (S105 in Fig. 6).

Stated another way, control is performed to store or transmit a plurality of divided pieces of compressed image data cIDT (for example, pieces of compressed image data cPP1, cPP2, cPP3, and cPP4), after compression processing has been performed on the entirety of original image data IDT.

By doing this, pieces of compressed image data cIDT of a plurality of divided regions that will be joined in decoding are prepared. In each of these pieces of compressed image data cIDT, image data near a boundary at which these pieces of compressed image data cIDT will be joined has a higher bit rate.

In the second embodiment, an example has been described where the controller 12 sets a division boundary dv of image data IDT serving as a processing target (S102 in Fig. 7), divides the image data on the basis of the division boundary (S110), sets a rate control area for each of divided regions (S111), and causes the compression encoder 11 to perform encoding processing (S112).

In such processing, similarly, compression encoding is performed in such a way that the rate control area has a different compression ratio. Then, in this case, similarly, a region of original image data can be arbitrarily divided, and therefore a division boundary can be set according to a device or a circuit configuration of a decoding system or a display system. In this case, a rate control area can be appropriately set.

In the first and third to ninth embodiments, when a block BK including a plurality of pieces of pixel data is an encoding processing unit, it is assumed that a rate control area includes at least blocks BK that are in contact with a division boundary. Stated another way, a row or column of blocks BK that have one side that forms a division boundary is included in the rate control area.

For example, in all of the examples of Figs. 5, 8, 9, 10A, 10B, 11A, 11B, 12A, 12B, 13A, 13B, 14A, and 14B, blocks BK (a hatched part) that are in contact with a division boundary dv are set to be a rate control area. As described above, at least blocks BK that are in contact with a division boundary are included in the rate control area, and have a higher bit rate, and this is effective to prevent conspicuousness of a joint portion in conducting a display after decoding.

Note that a minimum rate control area having a higher bit rate, as illustrated in Fig. 5, is suitable for a reduction in an amount of data.

In the third, fourth, sixth, seventh, and eighth embodiments, a case has been described where a rate control area includes a plurality of block rows that is continuous from a row of blocks that are in contact with a division boundary, or a plurality of block columns that is continuous from a column of blocks that are in contact with a division boundary.

Stated another way, at least a plurality of rows or columns from a row or column of blocks that are in contact with a division boundary is set to be a rate control area, and these blocks have a higher bit rate in some cases. For example, in the examples of Figs. 8, 9, 11B, 12B, 13A, and 13B, a plurality of rows or columns that is continuous from a row or column of blocks BK (a hatched part) that are in contact with a division boundary dv is set to be a rate control area. As described above, a certain range that is close to a division boundary is set to be a rate control area and has a higher bit rate, and this is effective to prevent conspicuousness of a joint portion in conducting a display after decoding.

In the fourth and ninth embodiments, an example has been described where the controller 12 performs control to generate, in a rate control area, blocks BK on which compression encoding is performed at the compression ratio R1 and blocks BK on which compression encoding is performed at the compression ratio R2 (see Figs. 9, 14A, and 14B).

Stated another way, control is performed in such a way that there are blocks BK on which an instruction to perform compression encoding at a different compression ratio is issued, among blocks BK that correspond to a rate control area.

By doing this, compression encoding is performed, for example, in such a way that a bit rate increases in stages in order of closeness to a division boundary, as illustrated in Fig. 9. This is also effective to prevent conspicuousness of a joint portion in conducting a display after decoding.

Alternatively, the compression ratios differ between blocks in the vertical direction and blocks in the horizontal direction, as illustrated in Figs. 14A and 14B, so that suitable compression encoding is performed in accordance with an image. By doing this, a request for an increase in image quality and a reduction in an amount of data can be copied with in some cases.

In the sixth, seventh, and eighth embodiments, an example where the controller 12 variably sets blocks that correspond to a rate control area has been described.

Stated another way, a rate control area is variably set according to a predetermined algorithm without fixedly setting the rate control area.

For example, as described in the examples of Figs. 11A and 11B, Figs. 12A and 12B, or Figs. 13A and 13B, setting of blocks BK that will be set to be a rate control area is variable according to a result of analyzing the content of an image, or is variable according to a user's operation. By doing this, a rate control area is suitably set in accordance with a situation, and compression encoding is performed.

Depending on the content of an image, a joint portion is inconspicuous without making a rate control area so larger, in some cases. In such an image, the number of rows or columns that will be set to be a rate control area is decreased, as illustrated in Fig. 11A, and this is desirable from the viewpoint of a reduction in an amount of data. In contrast, in an image in which a joint portion is likely to be conspicuous, the number of rows or columns that will be set to be a rate control area is increased, as illustrated in Fig. 11B, and this is effective to eliminate conspicuousness of the joint portion.

Furthermore, in a case where a feature of an image varies between in the horizontal direction and in the vertical direction, variable setting, as illustrated in Figs. 12A and 12B or Figs. 13A and 13B, is also effective.

In the fifth, seventh, and ninth embodiments, an example has been described where the controller 12 variably sets a compression ratio that the compression encoder 11 will be instructed to apply to a rate control area.

Stated another way, a compression ratio of a rate control area is variably set according to a predetermined algorithm without fixedly setting the compression ratio.

For example, as described in the examples of Figs. 10A and 10B, a compression ratio of a rate control area is variable according to a result of analyzing the content of an image, or is variable according to a user's operation. By doing this, a compression ratio is suitably selected in accordance with a situation, and compression encoding is performed.

Depending on the content of an image, a joint portion is inconspicuous without making a compression ratio so lower, in some cases. In such an image, a compression ratio of a rate control area is increased, and this is desirable from the viewpoint of a reduction in an amount of data. In contrast, in an image in which a joint portion is likely to be conspicuous, the compression ratio of the rate control area is decreased, and this is effective to eliminate conspicuousness of the joint portion. The similar is applied to the case of Figs. 12A and 12B.

Furthermore, in a case where a feature of an image varies between in the horizontal direction and in the vertical direction, it is also effective to variably setting a compression ratio, as illustrated in Figs. 13A and 13B.

In the eighth embodiment, an example has been described where, in a case where a division boundary dv exists in a horizontal direction and a vertical direction of image data IDT serving as a processing target, a rate control area is set in such a way that the number of rows of blocks BK along a division boundary in the horizontal direction is different from the number of columns of blocks BK along a division boundary in the vertical direction in the rate control area.

Stated another way, the numbers of block rows and block columns that configure a rate control area are made different from each other, and sizes in the horizontal direction and the vertical direction of the rate control area are made different from each other.

For example, the number of rows of blocks that configure a rate control area is made larger than the number of columns of blocks, as illustrated in Fig. 13A, and this is advantageous for eliminating conspicuousness of a joint portion in the horizontal direction. In particular, in a case where a joint portion in the vertical direction is inconspicuous, a decrease in the number of columns is suitable for a reduction in an amount of data.

In contrast, as illustrated in Fig. 13B, the number of columns of blocks that configure a rate control area is made larger than the number of rows of blocks, and this is advantageous for eliminating conspicuousness of a joint portion in the vertical direction. In particular, in a case where a joint portion in the horizontal direction is inconspicuous, a decrease in the number of rows is suitable for a reduction in an amount of data.

In the ninth embodiment, an example has been described where, in a case where a division boundary exists in a horizontal direction and a vertical direction of image data serving as a processing target, a compression ratio that the compression encoder 11 will be instructed to apply to blocks along a division boundary in the horizontal direction is made different from a compression ratio that the compression encoder 11 will be instructed to apply to blocks along a division boundary in the vertical direction in a rate control area.

Stated another way, a compression ratio is made different between blocks BK in a horizontal row and blocks BK in a vertical column from among blocks BK that configure a rate control area.

For example, as illustrated in Fig. 14A, the compression ratio R1 is applied to blocks BK that are arranged in a column direction, and the compression ratio R2 is applied to blocks BK that are arranged in a row direction. This is advantageous for eliminating conspicuousness of a joint portion in the vertical direction. Furthermore, in a case where a joint portion in the horizontal direction is inconspicuous, the compression ratio R2 that is higher than the compression ratio R1 is applied to blocks BK that are arranged in the row direction, and this is suitable for a reduction in an amount of data.

Alternatively, as illustrated in Fig. 14B, the compression ratio R1 is applied to blocks BK that are arranged in the row direction, and the compression ratio R2 is applied to blocks BK that are arranged in a column direction. This is advantageous for eliminating conspicuousness of a joint portion in the horizontal direction. Furthermore, in a case where a joint portion in the vertical direction is inconspicuous, the compression ratio R2 that is higher than the compression ratio R1 is applied to blocks BK that are arranged in the column direction, and this is suitable for a reduction in an amount of data.

Note that it has also been described that the concept of Figs. 13A and 13B and the concept of Figs. 14A and 14B are combined, and in blocks in the column direction and the row direction, the numbers of columns and rows along division boundaries dv are made different from each other, and compression ratios are made different from each other. As described above, both a rate control area and a compression ratio are variably set, and therefore compression encoding that is more suitable to an image can also be performed.

In a decoding device 20 according to an embodiment, pieces of compressed image data cIDT (for example, cPP1, cPP2, cPP3, and cPP4) are input as a plurality of pieces of image data serving as a plurality of divided regions that forms one image. Respective pieces of compressed image data cIDT are obtained by performing encoding processing in such a way that a rate control area that has been set near a division boundary dv in division has a higher bit rate than a bit rate in a normal processing area. A plurality of decoders (decoding processing units) 21, 22, 23, and 24 that performs decoding is included to correspond to these pieces of compressed image data. Furthermore, the decoding device 20 includes a display controller (a display control unit) 25 that combines a plurality of pieces of image data (for example, pieces of divided image data PP1, PP2, PP3, and PP4) obtained by performing decoding by using the plurality of decoders 21, 22, 23, and 24 to form image data that configures one image, and causes a display to be conducted.

By doing this, pieces of image data in divided regions in which a bit rate is increased in a rate control area are decoded, and are further combined to be joined at division boundaries, and a display is conducted. Then, in this case, a high-grade image in which a joint portion is inconspicuous can be displayed.

Note that the effects described herein are only illustrative and are not restrictive, and other effects may be exhibited.

Note that the present technology can also employ the configuration described below.
(1) An encoding device including:
   an encoding processing section that performs encoding processing on image data serving as a processing target; and
   a control unit that controls the encoding processing to make a bit rate in a rate control area higher than a bit rate in an area other than the rate control area, the rate control area being located near a division boundary when the image data serving as the processing target is divided into a plurality of regions.
(2) The encoding device described in (1) described above,
   in which the encoding processing section performs compression encoding processing, and
   the control unit issues an instruction to perform the compression encoding processing in the rate control area at a compression ratio that is lower than a compression ratio of the compression encoding processing in the area other than the rate control area.
(3) The encoding device described in (1) or (2) described above,
   in which the control unit performs processing for setting the rate control area on the basis of the division boundary of the image data serving as the processing target.
(4) The encoding device described in any of (1) to (3) described above,
   in which the control unit performs:
   setting the division boundary of the image data serving as the processing target, and setting the rate control area on the basis of the division boundary; and
   issuing an instruction to make the bit rate in the rate control area higher than the bit rate in the area other than the rate control area, and causing the encoding processing section to perform the encoding processing on the image data serving as the processing target.
(5) The encoding device described in (4) described above,
   in which the control unit performs control to treat the image data on which the encoding processing has been performed as a plurality of pieces of image data obtained by performing division at the division boundary that has been set.
(6) The encoding device described in any of (1) to (3) described above,
   in which the control unit sets the division boundary of the image data serving as the processing target, divides the image data on the basis of the division boundary, sets the rate control area in each divided region, and causes the encoding processing section to perform the encoding processing.
(7) The encoding device described in any of (1) to (6) described above,
   in which, when it is assumed that a block including a plurality of pieces of pixel data is an encoding processing unit,
   the rate control area includes at least a plurality of the blocks that is in contact with the division boundary.
(8) The encoding device described in any of (1) to (6) described above,
   in which, when it is assumed that a block including a plurality of pieces of pixel data is an encoding processing unit,
   the rate control area includes a plurality of block rows that is continuous from a row of a plurality of the blocks that is in contact with the division boundary, or a plurality of block columns that is continuous from a column of a plurality of the blocks that is in contact with the division boundary.
(9) The encoding device described in any of (1) to (8) described above,
   in which, when it is assumed that a block including a plurality of pieces of pixel data is an encoding processing unit,
   the control unit performs control to generate, in the rate control area, a plurality of the blocks on which compression encoding is performed at a first compression ratio and a plurality of the blocks on which the compression encoding is performed at a second compression ratio.
(10) The encoding device described in any of (1) to (9) described above,
   in which, when it is assumed that a block including a plurality of pieces of pixel data is an encoding processing unit,
   the control unit variably sets a plurality of the blocks that corresponds to the rate control area.
(11) The encoding device described in any of (1) to (10) described above,
   in which the control unit variably sets a compression ratio that the encoding processing section will be instructed to apply to the rate control area.
(12) The encoding device described in any of (1) to (11) described above,
   in which, in a case where the division boundary exists in a horizontal direction and a vertical direction of the image data serving as the processing target,
   when it is assumed that a block including a plurality of pieces of pixel data is an encoding processing unit,
   the rate control area is set in such a way that a number of block rows along the division boundary in the horizontal direction is different from a number of block columns along the division boundary in the vertical direction in the rate control area.
(13) The encoding device described in any of (1) to (12) described above,
   in which, in a case where the division boundary exists in a horizontal direction and a vertical direction of the image data serving as the processing target,
   when it is assumed that a block including a plurality of pieces of pixel data is an encoding processing unit,
   the control unit makes a compression ratio that the encoding processing section will be instructed to apply to a plurality of the blocks along the division boundary in the horizontal direction different from a compression ratio that the encoding processing section will be instructed to apply to a plurality of the blocks along the division boundary in the vertical direction.
(14) An encoding method including: performing encoding processing on image data serving as a processing target in such a way that a bit rate in a rate control area is higher than a bit rate in an area other than the rate control area, the rate control area being located near a division boundary when the image data is divided into a plurality of regions.
(15) A decoding device including:
   a plurality of decoding processing units that performs decoding to correspond to a plurality of pieces of image data serving as a plurality of divided regions that forms one image, encoding processing having been performed on each of the plurality of pieces of image data in such a way that a bit rate in a rate control area is higher than a bit rate in an area other than the rate control area, the rate control area having been set near a division boundary in division; and
   a display control unit that combines the plurality of pieces of image data obtained by performing the decoding by using the plurality of decoding processing units to form image data that configures one image, and causes a display to be conducted.

### REFERENCE SIGNS LIST

- 1, 2: Image processing apparatus
- 10: Encoding device
- 11: Compression encoder
- 12: Controller
- 13: Storage unit
- 14: Communication unit
- 15: Operation unit
- 16: Image source

- 20: Decoding device
- 21, 22, 23, 24: Decoder
- 25: Display controller
- 26: Display unit
- 27: Image source

## Claims

1. An encoding device comprising:
an encoding processing section that performs encoding processing on image data serving as a processing target; and
a control unit that controls the encoding processing to make a bit rate in a rate control area higher than a bit rate in an area other than the rate control area, the rate control area being located near a division boundary when the image data serving as the processing target is divided into a plurality of regions.

2. The encoding device according to claim 1,
wherein the encoding processing section performs compression encoding processing, and
the control unit issues an instruction to perform the compression encoding processing in the rate control area at a compression ratio that is lower than a compression ratio of the compression encoding processing in the area other than the rate control area.

3. The encoding device according to claim 1,
wherein the control unit performs processing for setting the rate control area on a basis of the division boundary of the image data serving as the processing target.

4. The encoding device according to claim 1,
wherein the control unit performs:
setting the division boundary of the image data serving as the processing target, and setting the rate control area on a basis of the division boundary; and
issuing an instruction to make the bit rate in the rate control area higher than the bit rate in the area other than the rate control area, and causing the encoding processing section to perform the encoding processing on the image data serving as the processing target.

5. The encoding device according to claim 4,
wherein the control unit performs control to treat the image data on which the encoding processing has been performed as a plurality of pieces of image data obtained by performing division at the division boundary that has been set.

6. The encoding device according to claim 1,
wherein the control unit sets the division boundary of the image data serving as the processing target, divides the image data on a basis of the division boundary, sets the rate control area in each divided region, and causes the encoding processing section to perform the encoding processing.

7. The encoding device according to claim 1,
wherein, when it is assumed that a block including a plurality of pieces of pixel data is an encoding processing unit,
the rate control area includes at least a plurality of the blocks that is in contact with the division boundary.

8. The encoding device according to claim 1,
wherein, when it is assumed that a block including a plurality of pieces of pixel data is an encoding processing unit,
the rate control area includes a plurality of block rows that is continuous from a row of a plurality of the blocks that is in contact with the division boundary, or a plurality of block columns that is continuous from a column of a plurality of the blocks that is in contact with the division boundary.

9. The encoding device according to claim 1,
wherein, when it is assumed that a block including a plurality of pieces of pixel data is an encoding processing unit,
the control unit performs control to generate, in the rate control area, a plurality of the blocks on which compression encoding is performed at a first compression ratio and a plurality of the blocks on which the compression encoding is performed at a second compression ratio.

10. The encoding device according to claim 1,
wherein, when it is assumed that a block including a plurality of pieces of pixel data is an encoding processing unit,
the control unit variably sets a plurality of the blocks that corresponds to the rate control area.

11. The encoding device according to claim 1,
wherein the control unit variably sets a compression ratio that the encoding processing section will be instructed to apply to the rate control area.

12. The encoding device according to claim 1,
wherein, in a case where the division boundary exists in a horizontal direction and a vertical direction of the image data serving as the processing target,
when it is assumed that a block including a plurality of pieces of pixel data is an encoding processing unit,
the rate control area is set in such a way that a number of block rows along the division boundary in the horizontal direction is different from a number of block columns along the division boundary in the vertical direction in the rate control area.

13. The encoding device according to claim 1,
wherein, in a case where the division boundary exists in a horizontal direction and a vertical direction of the image data serving as the processing target,
when it is assumed that a block including a plurality of pieces of pixel data is an encoding processing unit,
the control unit makes a compression ratio that the encoding processing section will be instructed to apply to a plurality of the blocks along the division boundary in the horizontal direction different from a compression ratio that the encoding processing section will be instructed to apply to a plurality of the blocks along the division boundary in the vertical direction.

14. An encoding method comprising:
performing encoding processing on image data serving as a processing target in such a way that a bit rate in a rate control area is higher than a bit rate in an area other than the rate control area, the rate control area being located near a division boundary when the image data is divided into a plurality of regions.

15. A decoding device comprising:
a plurality of decoding processing units that performs decoding to correspond to a plurality of pieces of image data serving as a plurality of divided regions that forms one image, encoding processing having been performed on each of the plurality of pieces of image data in such a way that a bit rate in a rate control area is higher than a bit rate in an area other than the rate control area, the rate control area having been set near a division boundary in division; and
a display control unit that combines the plurality of pieces of image data obtained by performing the decoding by using the plurality of decoding processing units to form image data that configures one image, and causes a display to be conducted.
